# EUROPÄISCHE PATENTANMELDUNG

(11) **EP 4 435 344 A1**
(43) Veröffentlichungstag der Anmeldung: **25.09.2024**
(21) Anmeldenummer: 23178030.5
(22) Anmeldetag: 07.06.2023
(51) Int. Cl.: F24S 25/61, H02S 20/23

(54) **BEFESTIGUNGSSYSTEM**

(30) Priorität: 24.03.2023 EP 23164013
(71) Anmelder: AEROCOMPACT Group Holding AG, 1010 Wien (AT)
(72) Erfinder: Kremmel, Daniel, 6835 Zwischenwasser (AT)
(74) Vertreter: Patent- und Rechtsanwälte Behrmann Wagner PartG mbB

(57) **Zusammenfassung**

Die Erfindung betrifft Befestigungssystem (1) zur Befestigung einer Montageschiene (23) für ein Aufdachelement, insbesondere ein Solarpanel oder Photovoltaikmodul (24) auf einem Dach eines Gebäudes, umfassend ein an einem Dachsparren (4) oder -balken befestigbares Basiselement (2), ein mit dem Basiselement (2) lösbar verbindbares Befestigungs-element (3) zum Befestigen der Montageschiene sowie ein zwischen dem Basiselement und dem Befestigungselement anordenbares Abdeckblech (12) zum Abdecken eines Befestigungsbereiches des Daches, wobei das Abdeckblech durch die lösbare Verbindung des Basiselements mit dem Befestigungselement zwischen dem Basiselement und dem Befestigungselement gehalten wird.

## Beschreibung

Die vorliegende Erfindung betrifft ein Befestigungssystem zur Befestigung einer Montageschiene für ein Aufdachelement, insbesondere ein Solarpanel oder Photovoltaikmodul auf dem Dach eines Gebäudes.

Zur Montage einer Montageschiene für ein Solarpanel oder ein Photovoltaikmodul auf einem Dach mit Dachziegeln werden zunächst im Montagebereich Dachziegel entfernt, sodass Dachsparren bzw. Dachbalken freiliegen. An einem dieser Dachsparren oder -balken kann sodann ein Montagehaken angeschraubt werden. Dieser Montagehaken dient wiederum zur Befestigung einer Montageschiene. Eines der Hauptprobleme der bekannten Montagetechniken ist darin zu sehen, den Montagebereich, welcher ja frei von Dachziegeln oder anderen Dacheindeckungen ist, vor eindringendem Wasser zu schützen.

Um dieses Problem zu lösen, schlägt die DE 10 2021 100 081 A1 eine Abdeckvorrichtung zum Abdecken eines Befestigungsbereichs eines Dachs zur Befestigung eines Solarpanels oder eines Photovoltaikmoduls vor, aufweisend eine Metallplatte mit einer Aussparung für einen Dachhaken, wobei die Aussparung von einer Gummimanschette umschlossen ist. Die Gummimanschette ist auf der Oberseite der Metallplatte befestigt. Durch diese Gummimanschette wird der Dachhaken geführt. Um zu verhindern, dass Regenwasser in die Gummimanschette eindringt, wird die Gummimanschette mittels eines Kabelbinders am Dachhaken fixiert.

Die in der genannten Druckschrift vorgeschlagene Konstruktion ist komplex und aufwendig. Auch die Montage der gesamten Abdeckvorrichtung ist kompliziert. Ein weiteres Problem besteht darin, dass die Gummimanschette, welche die Aussparung in der Metallplatte umschließt, im Laufe der Zeit durch UV-Strahlung porös wird, sodass Wasser durch die porös werdende Gummimanschette eindringen kann. Auch der oben erwähnte Kabelbinder lockert sich mit der Zeit und wird brüchig. Auch hier besteht das Problem, dass Wasser zwischen dem Dachhaken und der Gummimanschette ins Innere des Daches eindringen kann.

Der vorliegenden Erfindung liegt die Aufgabe zugrunde, eine Lösung zur Verfügung zu stellen, welche die oben genannten Probleme aus dem Stand der Technik überwindet.

Diese Aufgabe wird erfindungsgemäß durch ein Befestigungssystem mit den Merkmalen des Anspruchs 1 gelöst.

Das erfindungsgemäße Befestigungssystem lässt sich äußerst einfach und schnell an einem Dachsparren oder Dachbalken montieren. Hierzu wird zunächst das Basiselement an einem Dachsparren oder Dachbalken befestigt. Dies erfolgt in der Regel mittels selbstschneidender Schrauben. Anschließend wird das Abdeckblech in die gewünschte Position auf das Basiselement aufgelegt. Schließlich muss nur noch das Befestigungselement montiert werden. Hierzu wird das Befestigungselement lösbar mit dem Basiselement verbunden. Durch diese lösbare Verbindung wird das Abdeckblech zwischen dem Basiselement und dem Befestigungselement gehalten. In aller Regel erfolgt diese lösbare Verbindung mittels Schrauben, insbesondere selbstschneidender Schrauben. Bei dieser Ausführungsform weist das Basiselement mindestens eine, vorzugsweise zwei Aussparungen zum Hindurchführen von Befestigungsmitteln, insbesondere von Schrauben, zum Fixieren des Befestigungselements auf dem Basiselement auf. Beim Einschrauben der Schrauben durchdringen diese das Abdeckblech, sodass dieses fest zwischen dem Basiselement und dem Befestigungselement gehalten wird.

Bei dem erfindungsgemäßen Befestigungssystem ist also - anders als bei der Lehre der oben genannten Druckschrift - keine Aussparung vorgesehen, durch die ein Dachhaken geführt werden muss. Vor der Montage des Befestigungssystems ist das Abdeckblech komplett geschlossen. Die einzigen Aussparungen, die bei der Montage entstehen, sind die Bohrlöcher, welche durch das Einschrauben der genannten Schrauben entstehen.

Bei einer besonders bevorzugten Ausführungsform des erfindungsgemäßen Befestigungssystems sind die Aussparungen im Basiselement von konisch oder kraterartig ausgebildeten und sich in Richtung des Befestigungselements erstreckenden Wülsten eingefasst, welche vorzugsweise von entsprechend geformten Aussparungen, insbesondere Schraubenlöchern, im Befestigungselement formschlüssig aufnehmbar sind. Diese Wülste haben gleich mehrere Vorteile. So zeichnen sich diese beim Auflegen des Abdeckblechs auf das Basiselement ab, insbesondere dann, wenn das Abdeckblech mit etwas Druck auf das Basiselement aufgelegt wird. Durch dieses Abzeichnen der Wülste auf der Oberfläche des Abdeckblechs weiß ein Monteur sogleich, wo er die Befestigungsschrauben beim Montagevorgang ansetzen muss. Ein weiterer Vorteil besteht darin, dass das Abdeckblech beim Aufdrücken auf die besagten Wülste des Basiselements etwas nach oben gebogen wird. Wird dann das Befestigungselement so auf das Basiselement aufgesetzt, dass die Wülste von den entsprechend geformten, insbesondere konisch ausgebildeten Aussparungen, insbesondere Schraubenlöchern, formschlüssig aufgenommen werden, werden automatisch auch die aufgebogenen Abschnitte des Abdeckblechs von den Schraubenlöchern des Befestigungselements aufgenommen. Dadurch entsteht im Bereich der Schraubenlöcher und damit auch im Bereich der Öffnungen im Abdeckblech eine äußerst effektive Abdichtung gegenüber Regenwasser. Sollte nämlich wider Erwarten Wasser zwischen das Abdeckblech und das Befestigungselement dringen, wird dieses Wasser an den aufgebogenen Abschnitten des Abdeckblechs vorbeigeleitet, sodass dieses nicht in die von den Schrauben erzeugten Aussparungen im Abdeckblech eindringen kann.

Gemäß einer vorteilhaften Ausgestaltung kann vorgesehen sein, dass auf einer Unterseite des Befestigungselements, bevorzugt auf einer Unterseite einer Grundplatte des Befestigungselements, wenigstens abschnittsweise, bevorzugt vollflächig, ein Dichtmaterial, bevorzugt eine Schicht umfassend natürliches oder synthetisches Gummi, besonders bevorzugt umfassend Ethylene Propylene Diene Monomer (EPDM), angeordnet ist, das im verbundenen Zustand auf dem Abdeckblech aufliegt, insbesondere angepresst ist. Das Dichtmaterial ist bevorzugt elastisch oder teilelastisch. Das Dichtmaterial kann fest mit dem Befestigungselement verbunden, beispielsweise verklebt, sein. Durch das Dichtmaterial kann die Dichtwirkung zwischen dem Befestigungselement und Abdeckblech verbessert werden. Weiterhin kann eine verbesserte Ausrichtung oder Selbstausrichtung bei der Befestigung zwischen Basiselement und Befestigungselement erreicht werden, indem das Dichtmaterial unterschiedlich stark komprimiert oder verformt wird.

In einer weiteren vorteilhaften Variante kann vorgesehen sein, dass in einem verbundenen Zustand von Basiselement, Befestigungselement und Abdeckblech eine Labyrinth-Dichtung durch das Abdeckblech ausgebildet ist. Wie noch im Detail beschreiben wird, kann das Abdeckblech im Rahmen der Montage von Basiselement, Befestigungselement und Abdeckblech verformt werden. Bevorzugt kann dabei das Abdeckblech eine Form annehmen die zusammen mit, insbesondere zwischen, dem Basiselement und dem Befestigungselement eine wenigstens abschnittsweise eine Richtungsänderung, insbesondere Anhebung, ausbildet, die es zusätzlich erschwert, dass Feuchtigkeit oder Wasser vom Abdeckblech in Richtung des Basiselements passieren kann.

In aller Regel weist das Basiselement mindestens eine Aussparung zum Hindurchführen von Befestigungsmitteln, insbesondere von Schrauben, zum Befestigen des Basisteils an einem Dachsparren oder -balken auf. Dadurch kann das Basiselement schnell und einfach am Dach befestigt werden.

Mit Vorteil ist das Basiselement als Hohlprofil mit einer oberen Leiste, umfassend eine Auflagefläche zum Auflegen des Abdeckblechs, und einer unteren Leiste ausgebildet, wobei in der oberen Leiste die Aussparungen für die Befestigungsmittel vorgesehen sind und in der unteren Leiste vorzugsweise unterhalb der Aussparungen der oberen Leiste angeordnete weitere Aussparungen zur Aufnahme von Endbereichen der Befestigungsmittel angeordnet sind, wobei sich an das Hohlprofil vorzugsweise mindestens eine Befestigungsleiste anschließt, welche vorzugsweise eine Aussparung zum Hindurchführen eines Befestigungsmittels, insbesondere einer Schraube, zum Befestigen des Basiselements an einem Dachsparren oder -balken aufweist. Eine derartige hohlprofilartige Ausbildung ist besonders einfach und kostengünstig in der Herstellung und erlaubt eine äußerst einfache und schnelle Montage des Basiselements an einem Dachsparren oder -balken.

Mit Vorteil umfasst das Befestigungselement folgendes:
a) eine Grundplatte zum Aufsetzen auf das Abdeckblech und das unterhalb des Abdeckblechs positionierte Basiselement, wobei die Grundplatte mindestens eine, vorzugsweise zwei Aussparungen zum Hindurchführen von Befestigungsmitteln, insbesondere Schrauben, zum Befestigen des Befestigungselements am Basiselement und zum Fixieren des Abdeckblechs zwischen dem Befestigungselement und dem Basiselement aufweist, wobei die Aussparungen in der Grundplatte vorzugsweise konisch ausgebildet sind und über den Aussparungen im Basiselement angeordnet sind;
b) einen mit der Grundplatte verbundenen und mit dieser einen vorzugsweise im Wesentlichen rechten Winkel einschließenden Befestigungsabschnitt zum Befestigen eines Montagelements, insbesondere einer Montageschiene zum Montieren eines Photovoltaikmoduls oder Solarpanels, wobei der Befestigungsabschnitt vorzugsweise als Befestigungshaken oder -platte ausgebildet ist und vorzugsweise eine Aussparung, insbesondere ein Langloch, zum Hindurchführen einer Schraube aufweist.

Mit einer derartigen Ausbildung des Befestigungselements ist ein besonders einfaches und schnelles Montieren des Befestigungssystems möglich. Auch lässt sich ein solches Befestigungselement einfach und kostengünstig herstellen. In die konisch ausgebildeten Aussparungen lassen sich die oben beschriebenen Wülste im Basiselement formschlüssig aufnehmen.

Eine bevorzugte Ausführungsform des erfindungsgemäßen Befestigungssystems ist gekennzeichnet durch ein an einem Dachsparren oder -balken fixierbares Positionierungselement zum Positionieren des Basiselements in unterschiedlichen Abständen zu dem Dachsparren oder -balken, wobei das Positionierungselement vorzugsweise eine Grundplatte zum Aufsetzen auf den Dachsparren oder -balken mit mindestens einer, vorzugsweise zwei Aussparungen zum Hindurchführen von Befestigungsmitteln, insbesondere Schrauben zum Fixieren des Positionierungselements an dem Dachsparren oder -balken sowie zwei an gegenüberliegenden Längsseiten der Grundplatte angeordnete und mit dieser jeweils einen im Wesentlichen rechten Winkel einschließende Positionierungsleisten aufweist, welche Leisten mindestens zwei übereinander angeordnete Aufnahmenuten zur Aufnahme von Befestigungsleisten des Basiselements aufweisen. Mithilfe eines solchen Positionierungselements lässt sich das Basiselement schnell und einfach in unterschiedlichen Höhen montieren. Durch die Möglichkeit, das Basiselement in unterschiedlichen "Etagen" anzuordnen, kann schnell und flexibel auf unterschiedliche Gegebenheiten reagiert werden. Zudem verleiht ein derartiges Positionierungselement dem gesamten System eine höhere Stabilität und einen sichereren Sitz auf einem Dachsparren oder -balken.

Mit Vorteil sind die Aussparungen im Basiselement sowie im Positionierungselement zum Hindurchführen von Befestigungsmitteln zum Befestigen an einem Dachsparren oder -balken zur gemeinsamen Aufnahme eines Befestigungsmittels übereinander angeordnet. Dies erlaubt eine noch schnellere und sicherere Fixierung des Systems.

Eine besonders bevorzugte Ausführungsform des erfindungsgemäßen Befestigungssystems ist gekennzeichnet durch mindestens eine, vorzugsweise zwei selbstschneidende Schrauben, insbesondere Blechschrauben, welche übereinander angeordnete Aussparungen im Basiselement und im Befestigungselement sowie das dazwischen angeordnete Abdeckblech durchgreifen und diese Elemente miteinander verbinden. Mit derartigen Schrauben ist ein besonders schnelles und einfaches Montieren des erfindungsgemäßen Befestigungssystems an einem Dachsparren oder -balken möglich.

Mit Vorteil ist das erfindungsgemäße Befestigungssystem gekennzeichnet durch mindestens ein Dichtelement, welches zwischen einem Schraubenkopf einer eingedrehten Schraube und der Grundplatte des Befestigungselements angeordnet ist und eine Aussparung im Befestigungselement nach außen abschießt. Durch ein derartiges Dichtelement wird erreicht, dass kein Wasser in die Dachhaut eindringen kann.

Eine bevorzugte Ausführungsform des erfindungsgemäßen Befestigungssystems ist gekennzeichnet durch eine Lastverteilungsplatte mit einer Oberseite und einer Unterseite, wobei die Lastverteilungsplatte zwischen dem Basiselement und dem Abdeckblech angeordnet ist und mindestens eine, vorzugsweise mehrere Aussparungen zum Hindurchführen von Befestigungsmitteln, insbesondere Schrauben umfasst. Diese Lastverteilungsplatte ist insbesondere bei größeren Befestigungsbereichen von Vorteil. Das Abdeckblech ist also auf der Lastverteilungsplatte angeordnet und wird von dieser gestützt. Die Lastverteilungsplatte bewirkt beispielsweise bei hoher Schneelast eine ungewünschte Verformung des Abdeckblechs und verleiht dem Befestigungssystem insgesamt eine hohe Stabilität. Die Aussparungen für die Befestigungsschrauben sind insbesondere in einem solchen Abstand in der Lastverteilungsplatte eingebracht, welcher dem Abstand zwischen den Schrauben zum Befestigen des Befestigungselements am Basiselement entspricht. Um eine größere Flexibilität zu erreichen, ist insbesondere eine Vielzahl derartiger Aussparungen in der Lastverteilungsplatte vorgesehen.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Fig. 1:: einen Längsschnitt durch ein erfindungsgemäßes Befestigungssystem (ohne Abdeckblech);
- Fig. 2:: eine perspektivische Längsschnittdarstellung des Befestigungssystems von Fig. 1;
- Fig. 3:: eine Seitenansicht des Befestigungssystems der Fig. 1 und 2 in einem fertig montierten Zustand;
- Fig. 4:: eine vergrößerte Darstellung aus Fig. 3 im Kontaktbereich zwischen Basiselement und Befestigungselement;
- Fig. 5:: eine weiter vergrößerte Darstellung der Fig. 3 bzw. 4;
- Fig. 6:: eine perspektivische Darstellung einer Solaranlage, deren Module mithilfe des Befestigungssystems nach den Fig. 1 bis 5 montiert sind;
- Fig. 7:: eine vergrößerte Darstellung aus der Fig. 6 im Bereich eines erfindungsgemäßen Befestigungssystems;
- Fig. 8:: eine perspektivische Darstellung des Befestigungssystems von Fig. 1 mit Lastverteilungsplatte.

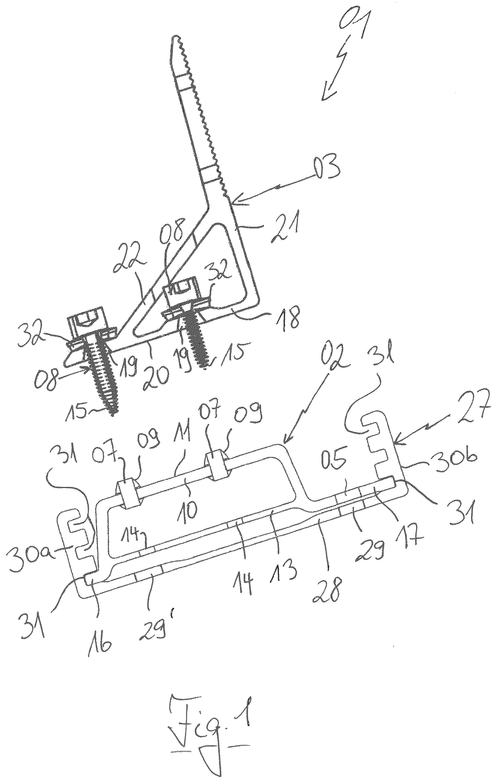

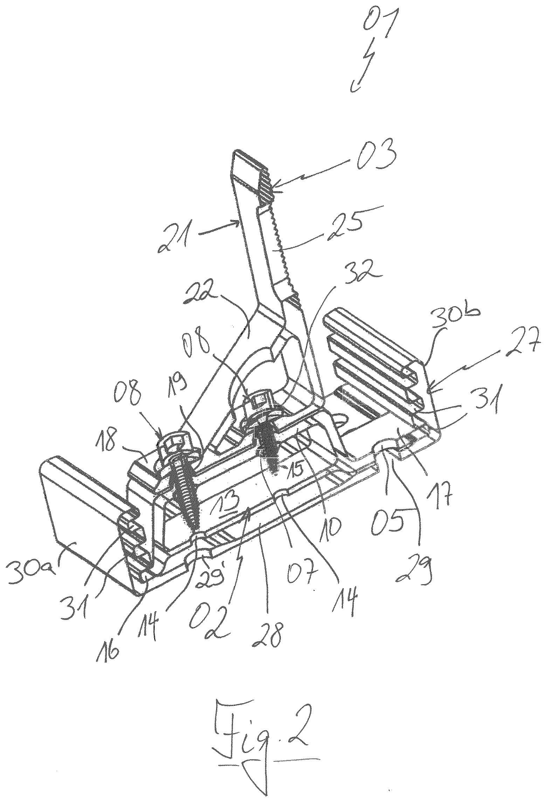

Fig. 1 zeigt ein erfindungsgemäßes Befestigungssystem im noch unmontierten Zustand. Das Befestigungssystem 01 umfasst ein an einem Dachsparren oder Dachbalken befestigbares Basiselement 02 sowie ein mit dem Basiselement 02 lösbar verbindbares Befestigungselement 03 zum Befestigen einer Montageschiene. Das beim erfindungsgemäßen Befestigungssystem 01 weiter vorgesehene Abdeckblech ist in den Fig. 1 und 2 noch nicht dargestellt. Dieses Abdeckblech wird zwischen dem Basiselement 02 und dem Befestigungselement 03 positioniert. Fig. 2 zeigt das Befestigungssystem 01 von Fig. 1, wobei in der Fig. 2 demonstriert wird, wie das Befestigungselement 03 auf dem Basiselement 02 beim Montieren des Systems positioniert wird.

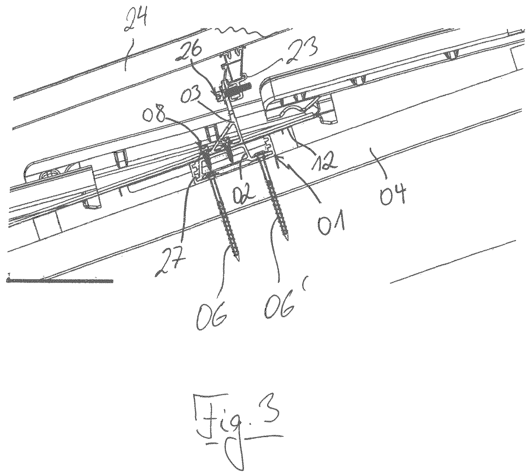

Die weiteren Merkmale des Befestigungssystems 01 der Fig. 1 und 2 werden nun auch in der Zusammenschau mit der Fig. 3 illustriert. Fig. 3 zeigt das Befestigungssystem 01 in einem auf einem Dachsparren 04 montierten Zustand.

Das Basiselement 02 weist eine Aussparung 05 zum Hindurchführen einer Schraube 06 zum Befestigen des Basiselements 02 an dem Dachsparren 04 auf.

Das Basiselement 02 weist ferner zwei Aussparungen 07 zum Hindurchführen von Schrauben 08 zum Fixieren des Befestigungselements 03 auf dem Basiselement 02 auf. Die Aussparungen 07 im Basiselement 02 sind von konisch ausgebildeten und sich in Richtung des Befestigungselements 03 erstreckenden Wülsten 09 eingefasst.

Das Basiselement 02 ist als Hohlprofil mit einer oberen Leiste 10, umfassend eine Auflagefläche 11 zum Auflegen des Abdeckblechs 12 und einer unteren Leiste 13 ausgebildet. In der oberen Leiste 10 sind die bereits oben erwähnten Aussparungen 07 vorgesehen. In der unteren Leiste 13 sind unterhalb der Aussparungen 07 der oberen Leiste 10 weitere Aussparungen 14 zur Aufnahme von Endbereichen 15 der Schrauben 08 angeordnet. An das Hohlprofil schließen sich eine erste Befestigungsleiste 16 sowie eine zweite Befestigungsleiste 17 an. In der zweiten Befestigungsleiste 17 befindet sich die Aussparung 05 zur Befestigung des Basiselements 02 an dem Dachsparren 04.

Auch das Befestigungselement 03 ist bei der gezeigten Ausführungsform profilartig ausgebildet. Es umfasst eine Grundplatte 18 zum Aufsetzen auf das Abdeckblech 12 und das unterhalb des Abdeckblechs positionierte Basiselement 02. Auf der Unterseite der Grundplatte 18 kann ein dicht im Detail dargestelltes Dichtmaterial, besonders bevorzugt umfassend Ethylene Propylene Diene Monomer (EPDM), angeordnet sein. Das Dichtmaterial verhindert oder minimiert ein Eindringen von Feuchtigkeit in den Bereich zwischen Basiselement 02 und Abdeckblech 12. In der Grundplatte 18 sind zwei Aussparungen 19 zum Hindurchführen der Schrauben 08 zum Befestigen des Befestigungselements 03 am Basiselement 02 und zum Fixieren des Abdeckblechs 12 zwischen dem Befestigungselement 03 und dem Basiselement 02 vorgesehen. Die genannten Aussparungen 19 sind im vorliegenden Ausführungsbeispiel konisch ausgebildet, wobei sich ihr Durchmesser von einer Auflagefläche 20 aus nach oben hin verjüngen.

Das Befestigungselement 03 umfasst ferner einen mit der Grundplatte 18 einstückig verbundenen und mit dieser einen rechten Winkel einschließenden Befestigungsabschnitt 21. Der Befestigungsabschnitt 21 ist mit der Grundplatte 18 über eine Verbindungsleiste 22 verbunden, sodass die Grundplatte 18, der Befestigungsabschnitt 21 und die Verbindungsleiste 22 ein Hohlprofil mit einem im Wesentlichen dreieckigen Querschnitt bilden.

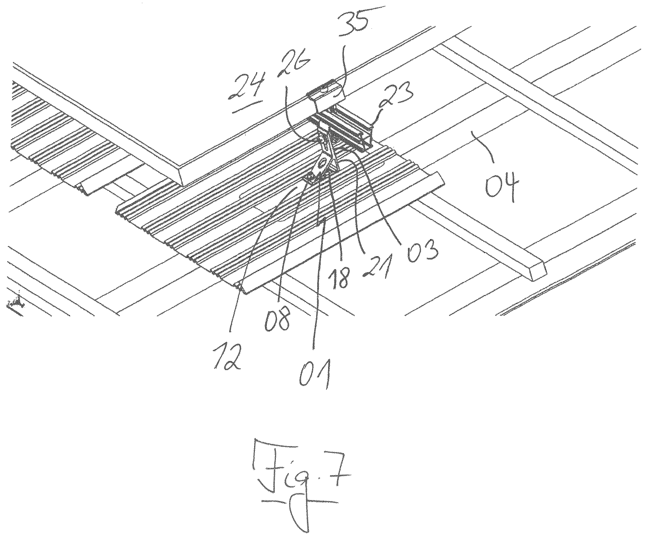

Der Befestigungsabschnitt 21 dient zum Befestigen einer Montageschiene 23 zum Montieren eines Photovoltaikmoduls 24. Derartige Montageschienen 23 und Photovoltaikmodule 24 sind in den Fig. 3 sowie Fig. 6 und Fig. 7 dargestellt. Der Befestigungsabschnitt 21 ist als Befestigungsplatte ausgebildet und weist ein Langloch 25 zum Hindurchführen einer Schraube 26 zum Fixieren der Montageschiene 23 auf.

Des Weiteren umfasst das Befestigungssystem 01 ein an einem Dachsparren oder Dachbalken fixierbares Positionierungselement 27 zum Positionieren des Basiselements 02 in unterschiedlichen Abständen zu einem Dachsparren oder Dachbalken. Das Positionierungselement 27 weist eine Grundplatte 28 zum Aufsetzen auf einem Dachsparren oder Dachbalken mit zwei Aussparungen 29 zum Hindurchführen von Schrauben 06, 6' zum Fixieren des Positionierungselements 27 an einem Dachsparren oder Dachbalken auf. Das Positionierungselement 27 weist ferner zwei an gegenüberliegenden Längsseiten der Grundplatte 28 angeordnete und mit dieser jeweils einen rechten Winkel einschließende Positionierungsleisten 30a, 30b auf. Die Positionierungsleisten 30a, 30b weisen jeweils drei übereinander angeordnete Aufnahmenuten 31 zur Aufnahme der Befestigungsleisten 16, 17 des Basiselements 02 auf.

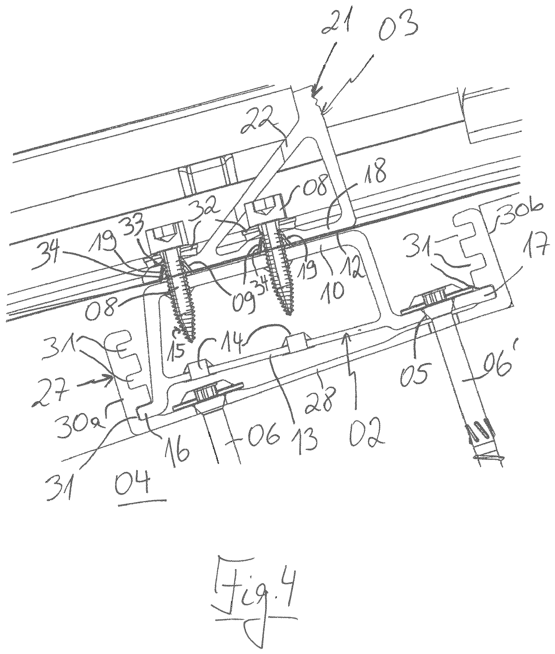

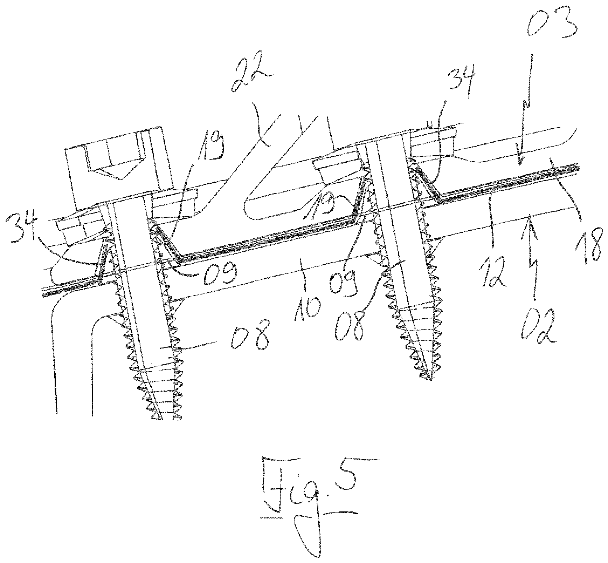

Das im montierten Zustand des Befestigungssystems 01 zwischen dem Basiselement 02 und dem Befestigungselement 03 positionierte Abdeckblech 12 ist als flexible Metallfolie aus Edelstahl ausgebildet. Das Abdeckblech 12 ist besonders gut in den Fig. 4 und 5 zu erkennen. Wie oben bereits erwähnt, wurde das Abdeckblech 12 in den Fig. 1 und 2 aus Übersichtsgründen nicht dargestellt.

Bei der Montage des Befestigungssystems 1 wird vorzugsweise wie folgt vorgegangen:
Zunächst wird das Basiselement 02 durch Einfügen der Befestigungsleisten 16 und 17 in zwei gegenüberliegende Aufnahmenuten 31 der Positionierungsleisten 30a, 30b des Positionierungselements 27 mit diesem verbunden. Im vorliegenden Ausführungsbeispiel wurden die Befestigungsleisten 16 und 17 in die jeweils unterste Aufnahmenut 31 eingeschoben, sodass das Basiselement 02 den geringstmöglichen Abstand zur Grundplatte des Positionierungselements 27 aufweist. Beim Zusammenschieben der Elemente 02 und 27 ist darauf zu achten, dass die Aussparung 05 in der Befestigungsleiste 17 exakt über der rechten Aussparung 29 in der Grundplatte 28 des Positionierungselements 27 angeordnet ist, sodass diese übereinander angeordneten Aussparungen von der Schraube 06` durchgriffen werden können.

Anschließend wird das Basiselement 02 mit dem Positionierungselement 27 durch die Schraube 06` am Dachsparren 04 festgeschraubt. Des Weiteren wird eine zweite Schraube 06 durch die zweite Aussparung 29' in der Grundplatte 28 des Positionierungselements 27 hindurchgeführt und am Dachsparren befestigt.

Alternativ hierzu kann auch so vorgegangen werden, dass zunächst das Positionierungselement 27 mithilfe der Schraube 06 am Dachsparren angeschraubt wird. Anschließend wird dann das Basiselement 02 in das bereits am Dachsparren vormontierte Positionierungselement 27 eingefügt. Schließlich wird bei dieser Vorgehensweise die Schraube 06` in die übereinander angeordneten Aussparungen 05 und 29 hindurchgeführt und auch am Dachsparren festgeschraubt.

Im nächsten Schritt wird nun das Abdeckblech 12 auf die Auflagefläche 11 der oberen Leiste 10 des Basiselements 02 aufgelegt und mit den Händen etwas angedrückt. Durch das Andrücken des Abdeckblechs auf die obere Leiste 10 zeichnen sich die Wülste 09 auf der Oberfläche des Abdeckblechs 12 ab, sodass ein Monteur ihre Position exakt erkennen kann. Anschließend wird das Befestigungselement 03 derart auf dem Abdeckblech 12 und dem Basiselement 02 aufgesetzt, dass sich die Aussparungen 19 im Befestigungselement 03 exakt über den Aussparungen 07 im Basiselement 02 befinden. Beim Aufsetzen des Befestigungselements 03 auf das Abdeckblech 12 und das darunterliegende Basiselement 02 werden die konisch geformten Wülste 09 in die ebenfalls konisch geformten Schraubenlöcher 19 der Grundplatte 18 des Befestigungselements 03 aufgenommen. Da sich zwischen dem Basiselement 02 und dem Befestigungselement 03 das Abdeckblech 12 befindet, welches durch das Andrücken an den Rändern der Wülste 09 anliegt, werden diese aufgebogenen Abschnitte 34 des Abdeckblechs 12 ebenfalls in den Aussparungen bzw. Schraublöchern 19 aufgenommen. Dadurch entsteht eine Labyrinth-Dichtung des Abdeckblechs 12, die ein Passieren von Feuchtigkeit durch das Abdeckblech verhindert. Schließlich werden Dichtringe 32 im Bereich der Aussparungen 19 positioniert, bevor dann die selbstschneidenden Schrauben 08 in die Aussparungen 19 eingeschraubt werden. Beim Einschrauben treffen die Schrauben 08 zunächst auf das Abdeckblech 12, durch welches die Schrauben 08 hindurchgeschraubt werden. Anschließend werden sie von den Aussparungen 07 im Basiselement 02 aufgenommen, sodass sie schließlich das Basiselement 02, das Abdeckblech 12 und das Befestigungselement 03 fest miteinander verbinden. Diese Situation ist in den Fig. 4 und 5 besonders gut zu erkennen. Die einzigen Aussparungen, welche beim Montagevorgang sich im Abdeckblech 12 befinden, sind die Öffnungen 33, welche durch die Schrauben 08 in das Abdeckblech 12 geschnitten werden. Ein großer Vorteil ist hierbei auch darin zu sehen, dass die Öffnungen 33 im Vergleich zum restlichen Niveau des Abdeckblechs 12 etwas erhöht angeordnet sind. Diese erhöhte Anordnung entsteht durch die von den Wülsten 09 erzeugten aufgebogenen Abschnitte 34 des Abdeckblechs 12. Durch die konische Form der Wülste 09 entstehen auch annähernd konisch ausgebildete aufgebogene Abschnitte 34, welche eine Art Krater bilden. Die Öffnung des Kraters entsteht dann durch Einschrauben der Schrauben 08, sodass die Öffnungen 33 quasi erhöht angeordnete "Krateröffnungen" bilden. Durch die leicht erhöhte Anordnung der Öffnungen 33 wird erreicht, dass für den unwahrscheinlichen Fall eines Wassereintritts zwischen dem Befestigungselement 03 und dem Abdeckblech12 eine Wasserableitung durch die aufgebogenen Abschnitte 34 des Abdeckblechs 12 gewährleistet ist. Eindringendes Wasser kann dann nicht in die Öffnungen 33 eindringen, sondern wird durch die aufgebogenen Abschnitte 34 an den Öffnungen 33 vorbeigeleitet. Die am oberen Rand der Öffnungen 33 angeordneten Dichtungen 32 dienen als zusätzliche Sicherung zur Verhinderung eines Wassereintritts in die Öffnungen 33.

Alles in allem ist mit dem erfindungsgemäßen Befestigungssystem eine schnelle und unkomplizierte Montage von Montageschienen möglich. Des Weiteren ist es mit dem erfindungsgemäßen Befestigungssystem nahezu ausgeschlossen, dass Wasser durch das Abdeckblech 12 in die Dachhaut dringen kann.

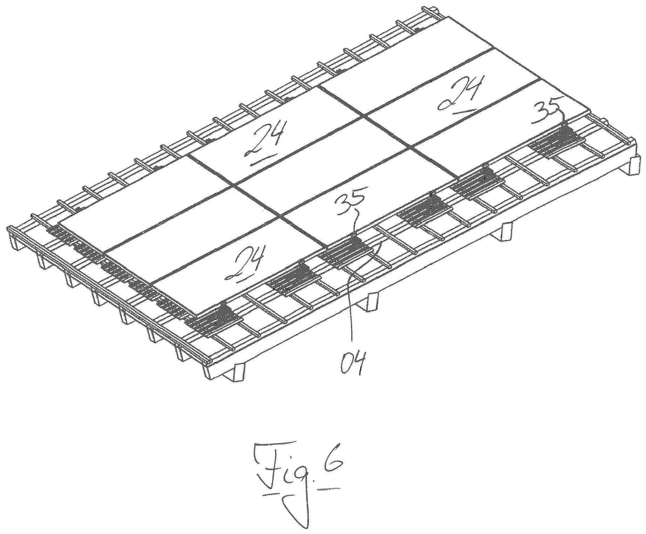

Zur Befestigung einer Montageschiene 23 am Befestigungselement 03 werden Schrauben 26 durch die Langlöcher 25 in den Befestigungselementen 03 hindurchgeführt und mit der Montageschiene 23 verschraubt. In die Montageschiene 23 werden wiederum Befestigungsklammern 35 integriert, mit deren Hilfe die Photovoltaikmodule 24 fixiert werden. Wie insbesondere in der Fig. 6 gut zu erkennen ist, wird eine Vielzahl von Befestigungssystemen 01 für die Montage einer kompletten Photovoltaikanlage benötigt. Im vorliegenden Ausführungsbeispiel erfolgt die Montage des Systems 01 bzw. der Montageschienen 23 und der PV-Module 24 auf einem Schrägdach, wie z.B. einem Satteldach.

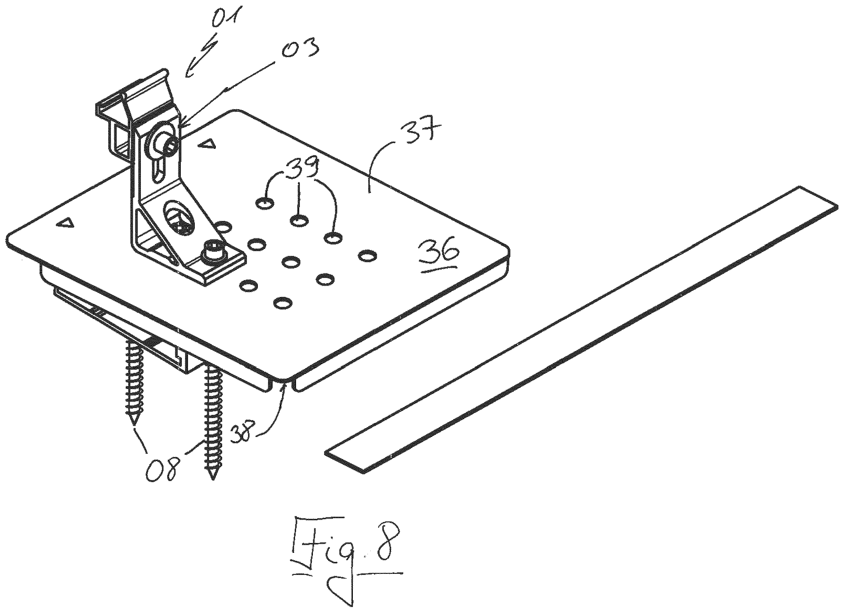

Fig. 8 zeigt das Befestigungssystem 1 im Zusammenwirken mit einer Lastverteilungsplatte 36. Die Lastverteilungsplatte 36 weist eine Oberseite 37 und eine der Oberseite gegenüberliegende Unterseite 38 auf. Die Lastverteilungsplatte 36 ist zwischen dem Basiselement 2 und dem - hier nicht dargestellten - Abdeckblech angeordnet. Auf der Oberseite 37 der Lastverteilungsplatte 36 ist somit die Abdeckplatte 3 angeordnet, auf welcher wiederum das Befestigungselement 3 positioniert ist. Die Lastverteilungsplatte 36 wirkt also unterstützend für das darauf angeordnete Abdeckblech 12. Unter der Lastverteilungsplatte 36 ist analog den obigen Ausführungen das Basiselement 2 positioniert. Die gesamte Konstruktion wird mittels den Schrauben 8 miteinander und an einem Dachsparren 4 befestigt. Hierfür weist die Lastverteilungsplatte 36 eine Mehrzahl von Aussparungen 39 auf. Die Aussparungen 39 weisen einen identischen Abstand zueinander auf, welcher dem Abstand der Aussparungen 19 im Befestigungselement 3 entspricht. Es sind insgesamt 12 Aussparungen vorgesehen, wobei diese in drei Reihen zu je vier Aussparungen angeordnet sind. Diese Anordnung der Aussparungen 39 ermöglicht eine äußerst flexible Positionierung des Befestigungssystems an der Lastverteilungsplatte 36.

### Bezugszeichenliste

- 01: Befestigungssystem
- 02: Basiselement
- 03: Befestigungselement
- 04: Dachsparren
- 05: Aussparung
- 06, 6`: Schraube
- 07: Aussparungen
- 08: Schrauben
- 09: Wülste
- 10: obere Leiste
- 11: Auflagefläche
- 12: Abdeckblech
- 13: untere Leiste
- 14: Aussparungen
- 15: Endbereiche
- 16: erste Befestigungsleiste
- 17: zweite Befestigungsleiste
- 18: Grundplatte
- 19: Aussparungen
- 20: Auflagefläche
- 21: Befestigungsabschnitt
- 22: Verbindungsleiste
- 23: Montageschiene
- 24: Photovoltaikmodul
- 25: Langloch
- 26: Schraube
- 27: Positionierungselement
- 28: Grundplatte
- 29,29': Aussparungen
- 30a/b: Positionierungsleisten
- 31: Aufnahmenuten
- 32: Dichtringe
- 33: Öffnungen
- 34: aufgebogene Abschnitte
- 35: Befestigungsklammern
- 36: Lastverteilungsplatte
- 37: Oberseite der Lastverteilungsplatte
- 38: Unterseite der Lastverteilungsplatte
- 39: Aussparungen in der Lastverteilungsplatte

## Patentansprüche

1. Befestigungssystem (1) zur Befestigung einer Montageschiene (23) für ein Aufdachelement, insbesondere ein Solarpanel oder Photovoltaikmodul (24) auf einem Dach eines Gebäudes, umfassend ein an einem Dachsparren (4) oder -balken befestigbares Basiselement (2), ein mit dem Basiselement (2) lösbar verbindbares Befestigungselement (3) zum Befestigen der Montageschiene sowie ein zwischen dem Basiselement und dem Befestigungselement anordenbares Abdeckblech (12) zum Abdecken eines Befestigungsbereiches des Daches, wobei das Abdeckblech durch die lösbare Verbindung des Basiselements mit dem Befestigungselement zwischen dem Basiselement und dem Befestigungselement gehalten wird.

2. Befestigungssystem (1) nach Anspruch 1,
**dadurch gekennzeichnet,**
**dass** auf einer Unterseite des Befestigungselements (3), bevorzugt auf einer Unterseite einer Grundplatte (18), wenigstens abschnittsweise, bevorzugt vollflächig, ein Dichtmaterial, bevorzugt eine Schicht umfassend natürliches oder synthetisches Gummi, besonders bevorzugt umfassend Ethylene Propylene Diene Monomer (EPDM), angeordnet ist, das im verbundenen Zustand auf dem Abdeckblech (12) aufliegt, insbesondere angepresst ist.

3. Befestigungssystem nach Anspruch 1 oder 2,
**dadurch gekennzeichnet,**
**dass** in einem verbundenen Zustand von Basiselement (2), Befestigungselement (3) und Abdeckblech (12) eine Labyrinth-Dichtung durch das Abdeckblech (12) ausgebildet ist.

4. Befestigungssystem nach einem der vorhergehenden Ansprüche,
**dadurch gekennzeichnet,**
**dass** das Basiselement (2) mindestens eine Aussparung (5) zum Hindurchführen eines Befestigungsmittels, insbesondere einer Schraube (6`) zum Befestigen des Basiselements an einem Dachsparren (4) oder -balken aufweist.

5. Befestigungssystem nach einem der vorhergehenden Ansprüche,
**dadurch gekennzeichnet,**
**dass** das Basiselement (2) mindestens eine, vorzugsweise zwei Aussparungen (7) zum Hindurchführen von Befestigungsmitteln, insbesondere von Schrauben (8) zum Fixieren des Befestigungselements (3) auf dem Basiselement aufweist, wobei die Aussparungen vorzugsweise von konisch oder kraterartig ausgebildeten und sich in Richtung des Befestigungselements erstreckenden Wülsten (9) eingefasst sind, welche vorzugsweise von entsprechend geformten Aussparungen, insbesondere Schraubenlöchern (19) im Befestigungselement formschlüssig aufnehmbar sind.

6. Befestigungssystem nach einem der vorhergehenden Ansprüche, insbesondere nach Anspruch 5,
**dadurch gekennzeichnet,**
**dass** das Basiselement (2) als Hohlprofil mit einer oberen Leiste (10), umfassend eine Auflagefläche (11) zum Auflegen des Abdeckblechs (12), und einer unteren Leiste (13) ausgebildet ist, wobei in der oberen Leiste die Aussparungen (7) für die Befestigungsmittel (8) vorgesehen sind und in der unteren Leiste vorzugsweise unterhalb der Aussparungen (7) der oberen Leiste angeordnete weitere Aussparungen (14) zur Aufnahme von Endbereichen (15) der Befestigungsmittel (8) angeordnet sind, wobei sich an das Hohlprofil vorzugsweise mindestens eine Befestigungsleiste (16, 17) anschließt, welche vorzugsweise eine Aussparung (5) zum Hindurchführen eines Befestigungsmittels, insbesondere einer Schraube (6`) zum Befestigen des Basiselements an einem Dachsparren (4) oder -balken aufweist.

7. Befestigungssystem nach einem der vorhergehenden Ansprüche,
**dadurch gekennzeichnet,**
**dass** das Befestigungselement (3) folgendes umfasst:
a) eine Grundplatte (18) zum Aufsetzen auf das Abdeckblech (12) und das unterhalb des Abdeckblechs positionierte Basiselement (2), wobei die Grundplatte mindestens eine, vorzugsweise zwei Aussparungen (19) zum Hindurchführen von Befestigungsmitteln, insbesondere Schrauben (8) zum Befestigen des Befestigungselements am Basiselement (2) und zum Fixieren des Abdeckblechs (12) zwischen dem Befestigungselement und dem Basiselement aufweist, wobei die Aussparungen (19) in der Grundplatte (18) vorzugsweise konisch ausgebildet sind und im montierten Zustand über den Aussparungen (7) im Basiselement (2) angeordnet sind;
b) einen mit der Grundplatte (18) verbundenen und mit dieser einen vorzugsweise im Wesentlichen rechten Winkel einschließenden Befestigungsabschnitt (21) zum Befestigen eines Montageelements, insbesondere einer Montageschiene (23) zum Montieren eines Photovoltaikmoduls (24) oder Solarpanels, wobei der Befestigungsabschnitt vorzugsweise als Befestigungshaken oder - platte ausgebildet ist und vorzugsweise eine Aussparung, insbesondere ein Langloch (25) zum Hindurchführen einer Schraube (26) aufweist.

8. Befestigungssystem nach einem der vorhergehenden Ansprüche, insbesondere nach Anspruch 6,
**gekennzeichnet durch**
ein an einem Dachsparren (4) oder -balken fixierbares Positionierungselement (27) zum Positionieren des Basiselements (2) in unterschiedlichen Abständen zu dem Dachsparren oder -balken, wobei das Positionierungselement vorzugsweise eine Grundplatte (28) zum Aufsetzen auf den Dachsparren oder -balken mit mindestens einer, vorzugsweise zwei Aussparungen (29) zum Hindurchführen von Befestigungsmitteln, insbesondere Schrauben (6, 6`) zum Fixieren des Positionierungselements an dem Dachsparren oder -balken sowie zwei an gegenüberliegenden Längsseiten der Grundplatte angeordnete und mit dieser jeweils einen im Wesentlichen rechten Winkel einschließende Positionierungsleisten aufweist (30a, 30b), welche Leisten mindestens zwei übereinander angeordnete Aufnahmenuten (31) zur Aufnahme von Befestigungsleisten (16, 17) des Basiselements (2) aufweisen.

9. Befestigungssystem nach Anspruch 8,
**dadurch gekennzeichnet,**
**dass** die Aussparungen (5, 28) im Basiselement (2) sowie im Positionierungselement (27) zum Hindurchführen von Befestigungsmitteln (6, 6`) zum Befestigen an einem Dachsparren (4) oder -balken zur gemeinsamen Aufnahme eines Befestigungsmittels (6`) übereinander angeordnet sind.

10. Befestigungssystem nach einem der vorhergehenden Ansprüche,
**gekennzeichnet durch**
mindestens eine, vorzugsweise zwei selbstschneidende Schrauben (8), insbesondere Blechschrauben, welche übereinander angeordnete Aussparungen (7, 19) im Basiselement (2) und im Befestigungselement (3) sowie das dazwischen angeordnete Abdeckblech (12) durchgreifen und diese Elemente miteinander verbinden.

11. Befestigungssystem nach einem der vorhergehenden Ansprüche,
**dadurch gekennzeichnet,**
**dass** das Abdeckblech (12) als flexible Metallfolie ausgebildet ist.

12. Befestigungssystem nach einem der Ansprüche 5 bis 11, insbesondere Anspruch 8, **gekennzeichnet durch** mindestens ein Dichtelement (32), insbesondere einen Dichtring, welcher eine Aussparung (19) im Befestigungselement (3) nach außen abdichtet und vorzugsweise zwischen dem Kopf einer Schraube (8) und der Grundplatte (18) des Befestigungselements (3) angeordnet ist.

13. Befestigungssystem nach einem der vorhergehenden Ansprüche, **gekennzeichnet durch** eine Lastverteilungsplatte (36) mit einer Oberseite (37) und einer Unterseite (38), wobei die Lastverteilungsplatte (36) zwischen dem Basiselement (2) und dem Abdeckblech (12) angeordnet ist und mindestens eine, vorzugsweise mehrere Aussparungen (39) zum Hindurchführen von Befestigungsmitteln, insbesondere Schrauben (8) umfasst.
